Europäisches Patentamt

European Patent Office

Office européen des brevets

(11) Publication number: **0 190 294**
**B1**

# EUROPEAN PATENT SPECIFICATION

(45) Date of publication of patent specification: **16.05.90**

(21) Application number: **85904068.5**

(22) Date of filing: **13.08.85**

(86) International application number:
**PCT/AU85/00190**

(87) International publication number:
**WO 86/01141 27.02.86 Gazette 86/05**

(51) Int. Cl.⁵: **B 27 C 7/04, B 23 B 31/10**

(54) A CHUCK ATTACHMENT.

(30) Priority: **13.08.84 AU 6530/84**

(43) Date of publication of application:
**13.08.86 Bulletin 86/33**

(45) Publication of the grant of the patent:
**16.05.90 Bulletin 90/20**

(84) Designated Contracting States:
**AT BE CH DE FR GB LI LU NL SE**

(56) References cited:
**AU-A-1 999 683**
**DE-A-2 632 938**
**DE-B-1 288 872**
**DE-C- 834 935**
**GB-B-1 282 090**
**US-A-3 747 945**
**US-A-4 496 165**

(73) Proprietor: **DARLOW, Michael John**
**20A City Road**
**Chippendale, NSW 2008 (AU)**

(72) Inventor: **DARLOW, Michael John**
**20A City Road**
**Chippendale, NSW 2008 (AU)**

(74) Representative: **Barnard, Eric Edward et al**
**BROOKES & MARTIN High Holborn House 52/54**
**High Holborn**
**London WC1V 6SE (GB)**

## Description

The present invention relates to the turning of workpieces from wood, and similar materials and, in particular, discloses a chuck attachment which enables workpieces to be either internally or externally held in a lathe without damaging the grip surface. The invention is therefore particularly applicable to workpieces having a thin wall section.

Background art

Many types of chuck are known, however, most suffer from several disadvantages in that they are limited as to the diameter of the workpiece able to be held, and also the shapes of acceptable workpieces. A further problem is that the chuck normally bears on the workpiece in a small number of locations (typically 3) and the area of contact between the workpiece and the chuck is normally relatively small. Thus some materials such as wood and other easily bruised substances, cannot be turned, or can only be turned with great difficulty, without damaging the material. This particularly applies where the article to be turned is a bowl or some other article having a thin wall section. Where the bowl has a large diameter it cannot be held at all by a chuck of smaller diameter.

Australian Patent Application No. AU—A—555 289 discloses a chuck attachment comprising three segmental plates formed from a radially segmented disc, releasably attached to the chuck by their rear surface and having an annular boss on their front surface. The plates are radially adjustable over a small range and grip outwardly i.e. the outer surface of the boss grips on the inner surface of a specially sized recess in the workpiece. The disadvantages of this attachment are that, since the boss only grips outwardly, the workpiece must be of such a size and shape that a recess can be provided in it and, furthermore, since the plates have a fixed configuration, the recess in each workpiece must be of the same size in order to be gripped by the boss.

It is the object of the present invention to overcome the abovementioned disadvantages by the provision of a chuck attachment which permits the article to be turned to be gripped over a large area of contact.

Disclosure of the invention

According to one aspect of the present invention there is disclosed an attachment for a scroll chuck for use in turning wooden or other easily bruised workpieces, said attachment comprising a plurality of segmental carrier plates, each having a front and a rear surface, the rear surface thereof being releasably secured to the chuck, characterised in that said plurality of carrier plates are formed from a radially segmented disc of turnable material and are secured to the chuck by means of a like plurality of substantially part-annular chuck plates each having a rear surface shaped to permit mounting on a substantially conventional scroll chuck and to be radially reciprocated thereby and a front surface through which pass a plurality of releasable fasteners from said rear surface of the chuck plate and into the rear surface of a corresponding one of said carrier plates, said fasteners terminating within said carrier plates so as to permit the front surface thereof to be turned to provide a recess of curved cross-section and of a size and shape for gripping a desired workpiece, the radial extent of said carrier plates being greater than the radial extent of said chuck plates.

According to a second aspect of the present invention there is disclosed a method of gripping wooden or other easily bruised workpieces for turning on a scroll chuck, the method characterised by the steps of:

a) attaching a plurality of segmental carrier plates, each made of turnable material and having a front and a rear surface, to a corresponding plurality of substantially part-annular chuck plates, each having a front and a rear surface, by means of a plurality of releasable fasteners, each fastener passing from the rear surface of a chuck plate, through its front surface and into the rear surface of a corresponding carrier plate;

b) mounting said chuck plates in a conventional manner on a conventional scroll chuck so as to be radially reciprocatable thereby;

c) radially moving said chuck plates so that they are approximately at the middle of their radial range of movement;

d) turning the front surface of said carrier plates so as to produce a recess of curved cross-section of a size and shape for gripping a desired workpiece;

e) radially moving said chuck plates in such a direction as to allow said workpiece to be easily positioned in said recess; and

f) radially moving said chuck plates in the other direction so as to grip said workpiece without bruising.

Brief description of the drawings

One embodiment of the present invention will now be described with reference to the drawings in which:

Fig. 1 is a plan view of one of the three segmental chuck plates of the chuck attachment of the preferred embodiment,

Fig. 2 is cross section along the line II—II of the chuck plate of Fig. 1,

Fig. 3 is a cross sectional view along the line III—III of the chuck plate of Fig. 1,

Fig. 4 is a view similar to Fig. 2 but showing, in cross-section, the corresponding segmental carrier plate mounted on the chuck plate, and

Fig. 5 is a view similar to Fig. 4 but showing a carrier plate adapted to mount a different workpiece.

Fig. 6 is an exploded perspective view from the rear showing the carrier plate and chuck plate, and

Fig. 7 is a perspective frontal view of the apparatus of Fig. 6.

Best mode of carrying out the invention

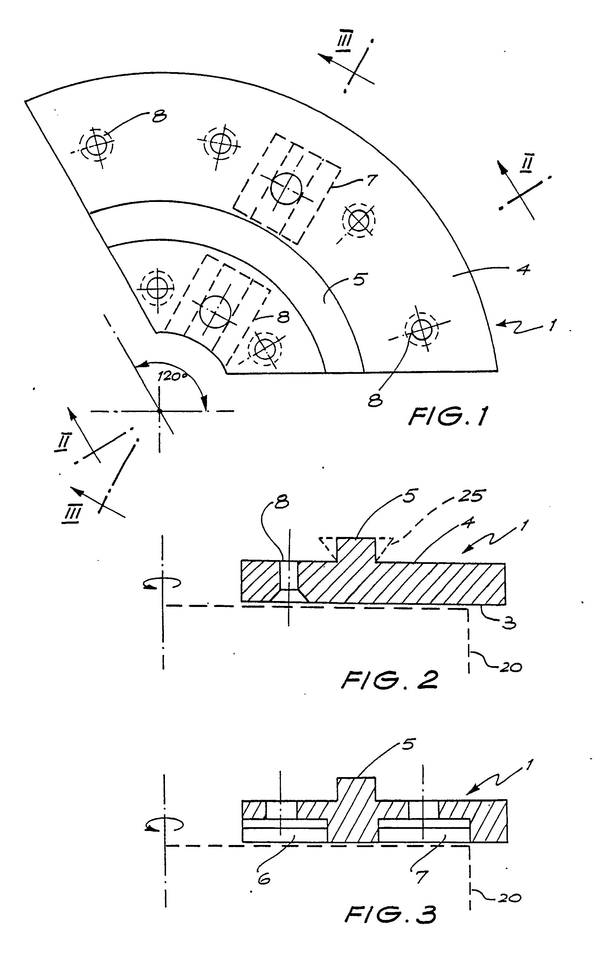

The chuck plate attachment of the preferred embodiment comprises three segmental chuck plates 1 (of which only one is illustrated in Figs. 1 to 5), and three segmental carrier plates 2 (of which only one is again illustrated in Figs. 1 to 5). As seen in Figs. 1 to 3, each chuck plate 1 is formed from a 120° segment and has a rear surface 3 and a front surface 4. A part annular ridge 5 is provided on the front surface and two recesses 6, 7 extend forwardly into the chuck plate from the rear surface 3. The recesses 6, 7 are shaped to mate with the bottom half of a conventional two piece jaw of a conventional scroll or self centering engineer's chuck 20.

Although the abovementioned jaws are not illustrated, the mounting of the chuck plates 1 on the scroll chuck 20 will be apparent to those skilled in the art and the position of the scroll body relative to the chuck plates 1 is indicated by means of broken lines in Figs. 2 to 5.

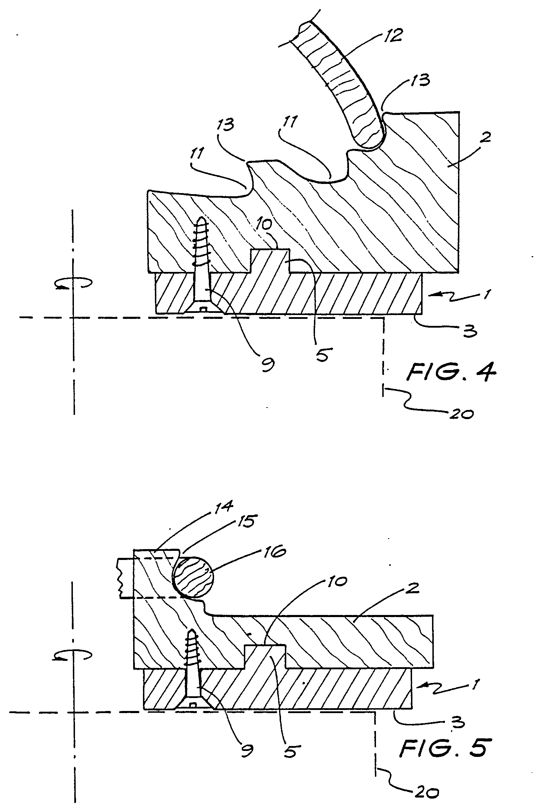

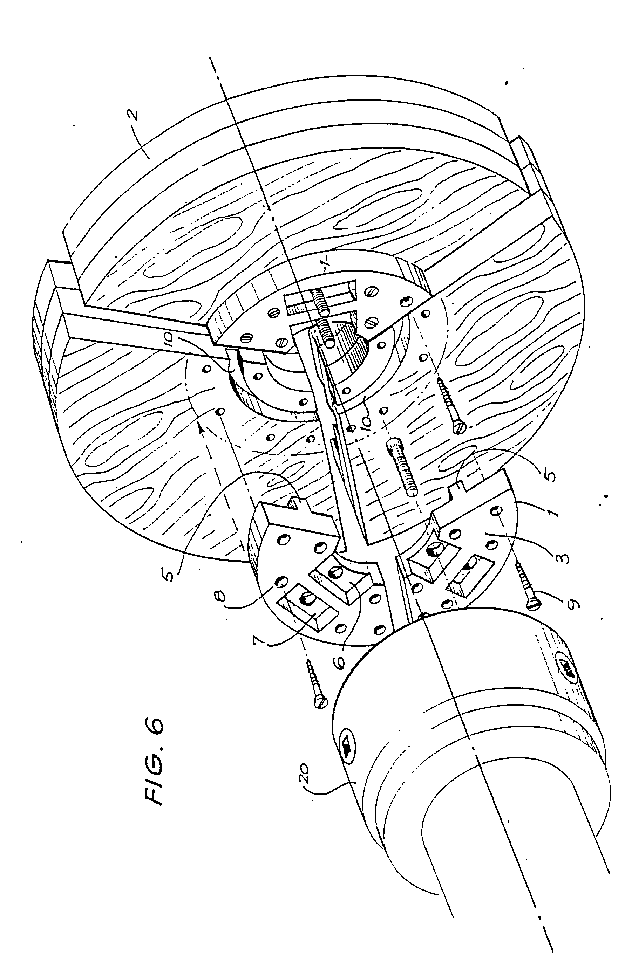

In addition, the chuck plates 1 are provided with a plurality of apertures 8 which are preferably countersunk on the rear surface 3 in order to permit attachment of a segmental carrier plate 2 by means of a conventional countersunk wood screw 9 as illustrated in Figs. 4, 5 and 6. The surface of the carrier plate 2 which mates with the front surface 4 of the chuck plates 1, is provided with a part annular groove 10 which corresponds with, and mates with, the ridge 5. The interengagement of the ridge 5 and groove 10 together with the fasteners 9 ensures a secure interconnection between each of the chuck plates 1 and the corresponding carrier plate 2 which is able to withstand centrifugal forces.

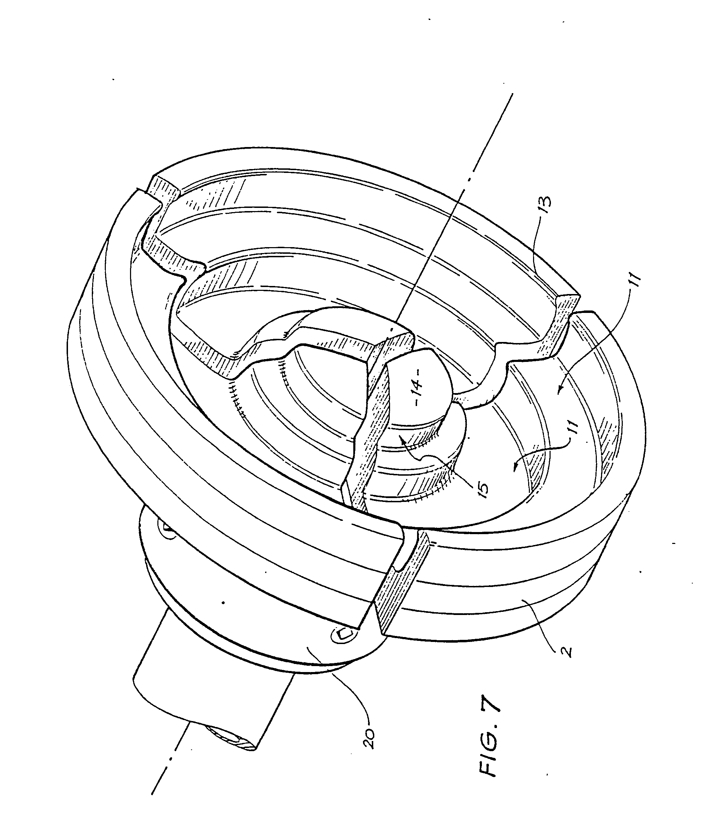

As seen in Figs. 4 and 7, the outwardly facing surface of the carrier plate 2 is turned in order to provide one or more recesses 11 which have a diameter corresponding to the diameter of the bowl 12 or other similarly shaped workpiece to be held. Preferably the recesses 11 are provided with a rounded arris 13 so as not to dent the bowl 12 and the recesses 11 are also preferably slightly undercut.

The recesses 11 are turned with the chuck jaws located approximately at the middle of their radial range of movement. After turning of the recesses 11, the chuck jaws are slightly expanded (as seen in Fig. 7), the lip of the bowl 12 (Fig. 4) is placed interior of the recess 11 to which it corresponds and the chuck jaws, chuck plates 1 and carrier plates 2 are then moved radially inwardly in order to grip the rim of the bowl 12. In this way the base of the bowl, for example, can be turned and the large area of contact between the rim of the bowl 12 and the carrier plates 2 ensures that the bowl 12 is not bruised or otherwise damaged.

Fig. 5 schematically illustrates an arrangement where it is desired to internally grip a workpiece such as a bangle, wooden curtain ring, or other similar annular article. Again, with the chuck jaws set towards the middle of their radial range, the carrier plate 2 is turned so as to provide a central stub 14. A radially outwardly facing recess 15 is then turned in the central stub 14, the chuck jaws moved radially inwardly, the workpiece 16 located over the recess 15 and the chuck jaws, chuck plates 1 and carrier plates 2 then move radially outwardly in order to grip the workpiece 16. The central stub 14 enables the radially outward surface of the workpiece 16 to be turned as desired. A central stub 14 is also illustrated in Fig. 7.

The foregoing describes only one embodiment of the present invention and modifications, obvious to those skilled in the art, can be made thereto without departing from the scope of the present invention as claimed.

Industrial applicability

For example, although the chuck attachment of the preferred embodiment has been described in relation to a three jaw scroll chuck, the invention is also clearly applicable to four jaw scroll chucks. Similarly, the recesses 6, 7 in the chuck plates 1 are required to be shaped to be engageable with the two piece jaws of particular brands of chuck for which the attachment is intended to be used.

The most suitable material for the chuck plates 1 is metal, although plastic, resin impregnated materials, and other such rigid turnable materials are also possible. The preferred material for the carrier plates 2 is wood, particle board material, or the like which is relatively easily turned and also relatively low cost since in time such carrier plates are discarded and a new set of carrier plates used.

Alternatively, the carrier plates can be of metal (or some other turnable material) and turned so that they can securely grip either the outside of a rim or spigot, or the inside of a recess. Each set of these alternative carrier plates is particular to a specific gripping situation and is exchanged for a different set of carrier plates rather than being re-machined or re-turned for each different gripping situation.

A further modification is illustrated in Fig. 2 by means of dashed lines. In this modified arrangement the annular ridge 5 is formed so as to have a generally dovetail cross-section. The modified ridge 25 can then be used to clamp directly onto, say, the base of a bowl as a modified chuck jaw.

It will be apparent that one of the advantages of the above described arrangement is that the chuck plates 1 can be formed to have a substantially larger diameter than the scroll chuck itself and that, if desired, the radial extent of the carrier plates 2 can be even greater thereby enabling large diameter workpieces to be turned on relatively smaller chucks. For example, a wooden bowl having a diameter of 203.2; 254 or 304.8 mm (8, 10, or 12 inches) could not be turned directly on a 101.6; 127 or 152.4 mm (4, 5 or 6 inch) diameter chuck respectively. However, with the carrier plates 2 of the preferred embodiment, such size diameter bowls can be easily turned on chucks of that size.

## Claims

1. An attachment for a scroll chuck (20) for use in turning wooden or other easily bruised workpieces (12), said attachment comprising a plurality of segmental carrier plates (2) formed from a radially segmented disc of turnable material, each having a front and a rear surface, the rear surface thereof being releasably secured to the chuck (20), characterised in that said plurality of carrier plates (2) are secured to the chuck (20) by means of a like plurality of substantially part-annular chuck plates (1) each having a rear surface (3) shaped to permit mounting on a substantially conventional scroll chuck (20) and to be radially reciprocated thereby and a front surface (4) through which pass a plurality of releasable fasteners (9) from said rear surface (3) of the chuck plate (1) and into the rear surface of a corresponding one of said carrier plates (2), said fasteners (9) terminating within said carrier plates (2) so as to permit the front surface thereof to be turned to provide a recess (11) of curved cross-section and of a size and shape for gripping a desired workpiece (12), the radial extent of said carrier plates (2) being greater than the radial extent of said chuck plates (1).

2. The chuck attachment as claimed in claim 1 wherein said chuck plates are each provided with a part-annular ridge (5, 25) which engages with a part-annular groove (10) in the corresponding carrier plate when said carrier plates are connected to said chuck plates.

3. The chuck attachment as claimed in claim 1 or 2 wherein the front surface of said carrier plates is turned to form an annular recess (11).

4. The chuck attachment as claimed in claim 3 wherein said annular recess is adjacent the radially outer periphery of said carrier plates.

5. The chuck attachment as claimed in claim 4 wherein said recess is provided with a rounded arris (13).

6. The chuck attachment as claimed in claim 3 wherein said carrier plate front surfaces have a centrally located stub (14) protruding outwardly therefrom and said annular recess surrounds said stub.

7. The chuck attachment as claimed in claim 1 or 2, wherein each of said chuck plates and said carrier plates comprises a segment of the respective annulus and disc having an annular extent of approximately 120 degrees.

8. The chuck attachment as claimed in claim 2 wherein said ridge (25) is shaped to grip a workpiece with said carrier plates not connected to said chuck plates.

9. A method of gripping wooden or other easily bruised workpieces (12) for turning on a scroll chuck (20), the method characterised by the steps of:

a) attaching a plurality of segmental carrier plates (2), each made of turnable material and having a front and a rear surface, to a corresponding plurality of substantially part-annular chuck plates (1), each having a front and a rear surface (3, 4), by means of a plurality of releasable fasteners (9), each fastener passing from the rear surface (3) of a chuck plate, through its front surface (4) and into the rear surface of a corresponding carrier plate;

b) mounting said chuck plates in a conventional manner on a conventional scroll chuck so as to be radially reciprocatable thereby;

c) radially moving said chuck plates so that they are approximately at the middle of their radial range of movement;

d) turning the front surface of said carrier plates so as to produce a recess (11) of curved cross-section of a size and shape for gripping a desired workpiece;

e) radially moving said chuck plates in such a direction as to allow said workpiece to be easily positioned in said recess; and

f) radially moving said chuck plates in the other direction so as to grip said workpiece without bruising.

10. The method of claim 9 wherein, for each workpiece of a different shape or configuration to be turned, a fresh plurality of carrier plates (2) are attached to said chuck plates (1) and turned to produce a recess (11) therein of a shape and size suitable for gripping the particular workpiece (12).

## Patentansprüche

1. Zusatz für ein Spannfutter (20) zur Verwendung beim Drehen von Holz oder anderen leicht quetschbaren Werkstücken (12), umfassend eine Anzahl von segmentartigen Trägerplatten (2), die aus einer radial segmentierten Scheibe drehbaren Materials geformt sind, wobei jede Trägerplatte (2) eine vordere Oberfläche und eine lösbar an dem Spannfutter befestigbare rückwärtige Oberfläche aufweist, dadurch gekennzeichnet, daß die Anzahl der Trägerplatten (2) an dem Spannfutter (20) durch Einrichtungen von einer gleichen Anzahl von im wesentlichen teilringförmigen Spannplatten (1) angebracht ist, wobei jede Spannplatte (1) eine rückwärtige Oberfläche (3), die so geformt ist, um eine Montage an einem im wesentlichen bekannten Spannfutter (20) zu erlauben und um radial daran hin und her bewegbar zu sein, und eine vordere Oberfläche (4) aufweist, durch welche eine Vielzahl von lösbaren Verbindungselementen (9) von der rückwärtigen Oberfläche (3) der Spannplatte (1) hindurchgreifen und in die rückwärtige Oberfläche einer zugehörigen Platte der Trägerplatten (2) eingreifen, wobei die Verbindungselemente (9) innerhalb der Trägerplatten (2) enden, so daß deren vordere Oberfläche mittels Drehen bearbeitet werden kann, um eine Vertiefung (11) mit einem krummlinigen Querschnitt und einer Größe sowie einer Form zum Aufspannen eines gewünschten Werkstückes (12) zu erzeugen, und wobei die radiale Erstreckung der Trägerplatten (2) größer als die radiale Erstreckung der Spannplatten (1) ist.

2. Spannzusatz nach Anspruch 1, dadurch gekennzeichnet, daß die Spannplatten jeweils mit einer teilringförmigen Rippe (5, 25) versehen sind, die mit einer teilringförmigen Nut (10) in der zugehörigen Trägerplatte zusammenwirkt, wenn die Trägerplatten mit den Spannplatten verbunden sind.

3. Spannzusatz nach Anspruch 1 oder 2, dadurch gekennzeichnet, daß die vordere Oberfläche der Trägerplatten durch Drehen bearbeitet ist, um eine ringförmige Vertiefung (11) zu bilden.

4. Spannzusatz nach Anspruch 3, dadurch gekennzeichnet, daß die ringförmige Vertiefung in der Nähe des radial äußeren Umfanges der Trägerplatten angeordnet ist.

5. Spannzusatz nach Anspruch 4, dadurch gekennzeichnet, daß die Vertiefung mit einer abgerundeten Kante (13) versehen ist.

6. Spannzusatz nach Anspruch 3, dadurch gekennzeichnet, daß die vorderen Oberflächen der Trägerplatten einen mittig angeordneten Zapfen (14) aufweisen, der sich von dort nach außen erstreckt, und daß die ringförmige Vertiefung um den Zapfen herum verläuft.

7. Spannzusatz nach Anspruch 1 oder 2, dadurch gekennzeichnet, daß jede der Spannplatten und jede der Trägerplatten ein eine ringförmige Erstreckung von annähernd 120° aufweisendes Segment des jeweiligen Ringes und der Scheibe umfaßt.

8. Spannzusatz nach Anspruch 2, dadurch gekennzeichnet, daß die Rippe (25) so geformt ist, ein Werkstück zu ergreifen, wobei die Trägerplatten (2) nicht mit den Spannplatten verbunden sind.

9. Verfahren zum Aufspannen von Holz oder anderen leicht quetschbaren Werkstücken (12) zum Bearbeiten durch Drehen an einem Spannfutter (20), gekennzeichnet durch die folgenden Schritte:

a) Befestigen einer Anzahl von aus drehbarem Material hergestellten, segmentartigen Trägerplatten (2), die eine vordere und eine rückwärtige Oberfläche aufweisen, an einer entsprechenden Anzahl von im wesentlichen teiltringförmigen, eine vordere und eine rückwärtige Oberfläche (3, 4) aufweisenden Spannplatten (1) durch Einrichtungen einer Anzahl von lösbaren Verbindungselementen (9), wobei jedes Verbindungselement von der rückwärtigen Oberfläche (3) einer Spannplatte durch deren vordere Oberfläche (4) hindurchgreift und in die rückwärtige Oberfläche einer korrespondierenden Trägerplatte eingreift;

b) Anbringen der Spannplatten in bekannter Weise auf einem bekannten Spannfutter, so daß sie in radialer Richtung hin und her bewegbar sind;

c) radiale Bewegung der Spannplatten, so daß sie annähernd in der Mitte ihres radialen Bewegungsbereichs angeordnet sind;

d) Drehen der vorderen Oberfläche der Trägerplatten in der Weise, um eine Vertiefung (11) mit einem krummlinigen Querschnitt von einer Große und Form zum Aufspannen eines gewünschten Werkstückes zu bilden;

e) radiales Bewegen der Spannplatten in eine Richtung in der Weise, um dem Werkstück zu ermöglichen, leicht in der Vertiefung angeordnet zu werden; und

f) radiales Bewegen der Spannplatten in die andere Richtung in der Weise, um das Spannen des Werkstückes ohne quetschen zu ermöglichen.

10. Verfahren nach Anspruch 9, dadurch gekennzeichnet, daß für jedes verschieden geformte oder verschieden zu drehende Werkstück eine neue Anzahl von Trägerplatten (2) an den Spannplatten (1) befestigt und gedreht wird, um eine Vertiefung (11) von einer Form und Größe darin zu bilden, die geeignet ist, das jeweilige Werkstück (12) zu spannen.

**Revendications**

1. Accessoire pour un mandrin de tour (20) destiné au tournage de pièces (12) en bois ou d'autres pièces suceptibles d'être facilement éraflées, ledit accessoire comprenant une pluralité de plaques porteuses (2) segmentaires formées à partir d'un disque segmenté radialement, fait d'un matériau pouvant être travaillé au tour, ayant chacune une surface antérieure et une surface postérieure, leur surface postérieure étant fixée de manière amovible au mandrin (20), caractérisé en ce que ladite pluralité de plaques porteuses (2) étant fixées au mandrin (20) au moyen d'une pluralité similaire de plaques de mandrin (1) substantiellement annulaires en partie ayant chacune une surface postérieure (3) conformée pour permettre son montage sur un mandrin (20) de type substantiellement classique et pour être déplacée alternativement par ce mandrin, et une surface antérieure (4) à travers laquelle passe une pluralité d'organes de fixation (9) amovibles à partir de ladite surface postérieure (3) de la plaque de mandrin (1), ces organes (9) passant dans la surface postérieure d'une desdites plaques porteuses (2) correspondante, lesdits organes de fixation (9) se terminant à l'intérieur desdites plaques porteuses (2) de manière à permettre à la surface frontale de celles-ci d'être travaillée au tour pour réaliser un logement (11) de section transversale incurvée et d'une taille et d'une forme voulues pour saisir une pièce à usiner (12) désirée, l'extension radiale desdites plaques porteuses (2) étant plus grande que l'extension radiale desdites plaques de mandrin (1).

2. Accessoire de mandrin selon la revendication 1, dans lequel lesdites plaques de mandrin sont munies chacune d'une corniche (5, 25) partiellement annulaire qui s'engage dans une rainure (10) partiellement annulaire dans la plaque porteuse correspondante quand lesdites plaques porteuses sont reliées auxdites plaques de mandrin.

3. Accessoire de mandrin selon la revendication 1 ou 2, dans lequel la surface frontale desdites plaques porteuses est usinée au tour pour former un logement annulaire (11).

4. Accessoire de mandrin selon la revendication 3, dans lequel ledit logement annulaire est adjacent à la périphérie radialement extérieure desdites plaques porteuses.

5. Accessoire de mandrin selon la revendication 4, dans lequel ledit logement est pourvu d'une arête arrondie (13).

6. Accessoire de mandrin selon la revendication 3, dans lequel lesdites surfaces frontales des plaques porteuses ont un téton (14) disposé au centre, faisant saillie vers l'extérieur à partir de ces surfaces, et ledit logement annulaire entoure ledit téton.

7. Accessoire de mandrin selon la revendication 1 ou 2, dans lequel chacune desdites plaques de mandrin et plaques porteuses comprend un segment de l'anneau et du disque respectifs ayant une étendue annulaire d'approximativement 120 degrés.

8. Accessoire de mandrin selon la revendication 2, dans lequel ladite corniche (25) est conformée pour saisir une pièce à usiner, lesdites plaques porteuses n'étant pas reliées auxdites plaques de mandrin.

9. Procédé pour saisir des pièces (12) en bois ou d'autres pièces susceptibles d'être facilement éraflées pour les tourner sur un mandrin expansible (20), ce procédé étant caractérisé par les opérations consistant à:

a) attacher une pluralité de plaques porteuses (2) segmentaires, faites chacune d'un matériau susceptible d'être travaillé au tour et ayant une surface antérieure et une surface postérieure, à une pluralité correspondante de plaques de mandrin (1) substantiellement annulaires en partie, ayant chacune une surface antérieure et une surface postérieure (3, 4) au moyen d'une pluralité d'organes de fixation (9) amovibles, chaque organe de fixation passant à partir de la surface postérieure (3) d'une plaque du mandrin, à travers sa surface antérieure (4) et pénétrant dans la surface postérieure d'une plaque porteuse correspondante;

b) monter lesdites plaques de mandrin de manière classique sur un mandrin expansible classique de manière à pouvoir être déplacées alternativement dans le sens radial par ce mandrin;

c) mouvoir radialement lesdites plaques de mandrin de telle sorte qu'elles soient approximativement au milieu de leur course radiale de mouvement;

d) usiner au tour la surface antérieure desdites plaques porteuses de manière à produire un logement (11) ayant une section transversale incurvée d'une taille et d'une forme pour saisir une pièce à tourner désirée;

e) mouvoir radialement lesdites plaques de mandrin dans un sens permettant à ladite pièce à usiner d'être facilement positionnée dans ledit logement; et

f) mouvoir radialement lesdites plaques de mandrin dans l'autre sens de manière à saisir ladite pièce à usiner sans l'érafler.

10. Procédé selon la revendication 9 dans lequel, pour chaque pièce à tourner ayant une forme ou une configuration différente, une nouvelle pluralité de plaques porteuses (2) sont attachées auxdites plaques de mandrin (1) et sont tournées pour y produire un logement (11) de forme et de taille appropriées pour saisir la pièce (12) particulière.

*III*

*8*

*7*

*II*

*5*

*4*

*1*

*120°*

*II*

*III*

*8*

*8*

*FIG.1*

*8*    *5*    *25*

*4*    *1*

*3*

*20*

*FIG.2*

*5*

*1*

*6*    *7*

*20*

*FIG.3*

FIG. 4

FIG. 5

FIG. 6

EP 0 190 294 B1

FIG. 7